# EUROPEAN PATENT SPECIFICATION

(11) **EP 0 989 025 B1**
(45) Date of publication and mention of the grant of the patent: **08.10.2008**
(21) Application number: 99108169.6
(22) Date of filing: 26.04.1999
(51) Int. Cl.: B60Q 1/14, F21V 14/08

(54) **Automobile headlight**
Autoscheinwerfer
Phare d'automobile

(30) Priority: 21.08.1998 JP 23560998; 27.04.1998 JP 11698998
(43) Date of publication of application: 29.03.2000
(73) Proprietor: Stanley Electric Co., Ltd., Meguro-ku Tokyo 153-8636 (JP)
(72) Inventor: Taniuchi, Hitoshi, Tokyo 145-0065 (JP)
(74) Representative: Wagner, Karl H.

(56) References cited:
- WO-A-91/02666
- DE-A- 4 137 332
- US-A- 5 213 406

## Description

### BACKGROUND OF THE INVENTION

### Field of the Invention

The present invention relates to an automobile headlight, and more particularly to a composition of the automobile headlight having a single fixed light source, a reflector, a fixed shade and a movable shade, characterized in that the fixed shade and the movable shade control light emitted from the light source to the reflector such that a light distribution of the headlight changes depending on a high beam mode or a low beam mode.

### Discussion of the Related Art Discussion of the Related Art

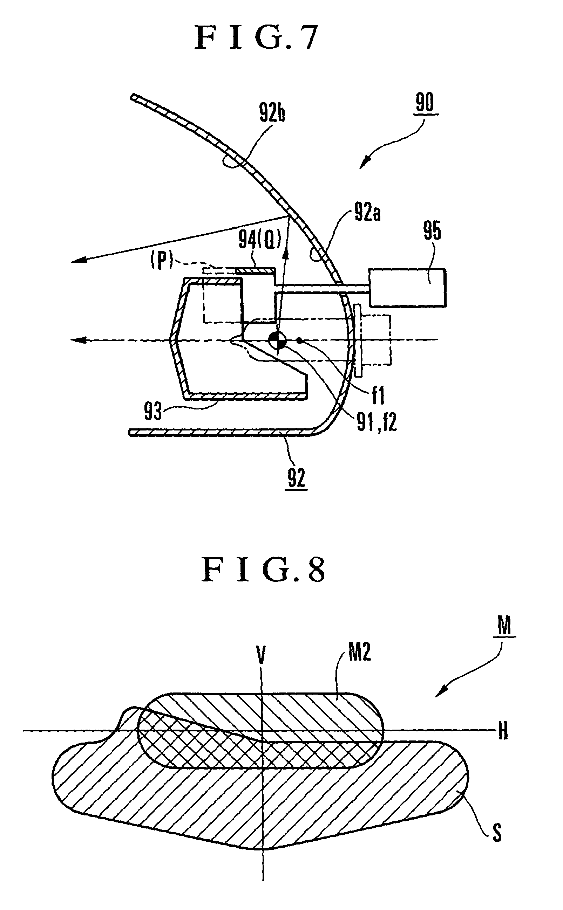

Fig. 7 illustrates a conventional automobile headlight 90 comprising a light source 91, a reflector 92, a fixed shade 93, a movable shade 94 capable of taking a low beam position Q or a high beam position P depending on a high beam mode or a low beam mode, and a driving unit 95 to change a position of the movable shade 94. The reflector 92 further comprises a high beam reflector portion 92a, which reflects light emitted from the light source 91 when the movable shade 94 is in the low beam position Q, having a rotated parabolic surface with a focus f1 positioned backward of the light source 91 in an illuminating direction, and a high beam reflector portion 92b, which reflects light emitted from the light source 91 when the movable shade 94 is in the high beam position P, and having a rotated parabolic surface with a focus f2 on the light source 91. The high beam reflector portion 92b is around an upper end of the reflector 92 when the headlight 90 is installed in the automobile. The fixed shade 93 blocks light emitted from the light source 91 from traveling directly into an illuminating direction, and also blocks emitted light from traveling toward a portion of the reflector 92. Reflected light at said portion of the reflector 92 forms unnecessary light distribution patterns. The movable shade 94 is moved by a driving unit 95 like a solenoid, and takes the high beam position P or the low beam position Q depending on the high beam mode or the low beam mode. When the movable shade 94 is in the low beam position Q, the movable shade 94 prohibits light emitted from the light source 91 from propagating towards the high beam reflector portion 92b, thereby providing a light distribution pattern S for the low beam mode which comprises light emitted downwardly from the low beam reflector portion 92a as depicted in Fig. 8. When the movable shade 94 is in the high beam position P, as depicted by broken lines in Fig. 7, the movable shade 94 partially covers the fixed shade 93. Light emitted from the light source 91 thus reaches the high beam reflector portion 92b, thereby providing a light distribution pattern M for the high beam mode, which comprises a light distribution pattern M2 that is light reflected on the the high beam reflector portion 92b toward the horizontal far front of the automobile headlight 90, and also provides the light distribution pattern S for the low beam mode, which comprises downward light reflected on the low beam reflector portion 92a. The light distribution pattern M is a combination of the light distribution patterns M2 and S.

The conventional automobile headlight 90 has the following problems. Even after a light distribution pattern is changed from the low beam mode to the high beam mode, long distance visibility does not significantly improve, because the driver's pupils contract when sensing the downward bright area close to the automobile, which consequently decreases the driver's luminosity. A characteristic of the light distribution pattern S for the low beam mode, i.e. illuminating a downward bright area in a relatively close distance or range to the automobile, still remains even after the light distribution is changed from the pattern S for the low beam mode to the pattern M for the high beam mode, because the light distribution pattern M for the high beam mode is formed by adding the light distribution pattern M2, which comprises light emitted in a horizontal frontal direction, to the light distribution pattern S comprising light emitted downward in a close distance from the automobile.

DE-A-41 37 332 discloses an elliptical double beam headlight having a reflecting body formed by an elliptic rear portion in which a light source is accommodated and by a parabolic front portion and which is partly closed by a projection lens. The parabolic portion carries an internal shielding device which is defined by a partly blocking shield and a shading element which is movable into and out of an operational configuration in which the shield cuts off a part of the beam emitted from the elliptic portion and the shading element blocks the light which is directly emitted from the light source.

### SUMMARY OF THE INVENTION

The present invention is directed to an automobile headlight that substantially obviates one or more of the above problems due to the limitations and disadvantages of the related art.

An object of the invention is to provide an automobile headlight capable of providing more appropriate light distribution patterns for both the high beam mode and the low beam mode.

The above object is achieved by providing an automobile headlight comprising a light source, a reflector having a low beam reflector portion, which reflects light emitted from the light source downwardly to form a light distribution pattern for the low beam mode, and a high beam reflector portion, which reflects light emitted from the light source horizontally towards the front of the automobile headlight when the movable shade is in a position for the high beam mode, a fixed shade which directs light emitted from the light source towards the reflector, a movable shade capable of taking a position P or Q depending on the high beam mode or the low beam mode, and a driving unit connected to the movable shade for changing a position of the movable shade, wherein when the movable shade is in the low beam position Q, the movable shade prohibits light emitted from the light source from propagating towards the high beam reflector portion and passes light emitted from the light source toward the low beam reflector portion, and when the movable shade is in the position P for the high beam mode, the movable shade prohibits partly emitted light at an upper end of the low beam reflector portion and passes light emitted from the light source toward the high beam reflector portion and the remaining low beam reflector portion. Thereby, an improved light distribution pattern for the high beam mode is achieved.

Additional objects and advantages of the invention will be set forth in part in the description which follows, and in part will be obvious from the description, or may be learned by practice of the invention. The objects and advantages of the invention will be realized and attained by means of the elements and combinations pointed out in the appended claims.

It is to be understood that both foregoing general description and the following detailed description are exemplary and explanatory and are intended to provide further explanation of the invention as claimed.

### BRIEF DESCRIPTION OF THE DRAWINGS

The accompanying drawings, which are incorporated in and constitute a part of this specification, illustrate several embodiments of the invention and together with the description, serve to explain the principles of the invention.
- Fig. 1: illustrates a cross-sectional view of a first preferred embodiment of the present invention when it forms a light distribution pattern for the low beam mode.
- Fig. 2: illustrates a light distribution pattern S for the low beam mode of the first preferred embodiment of the present invention.
- Fig. 3: is a diagram to illustrate directions of light rays reflected on the low beam reflector portion of the reflector.
- Fig. 4: is a cross-sectional view of the first preferred embodiment of the present invention when it forms a light distribution pattern for the high beam mode.
- Fig. 5: illustrates a light distribution pattern for the high beam mode of the first preferred embodiment of the present invention.
- Fig. 6: illustrates a wiring diagram or circuit of a second preferred embodiment of the present invention.
- Fig. 7: illustrates a cross-sectional view of a conventional automobile headlight.
- Fig. 8: illustrates a light distribution pattern for the high beam mode of the conventional automobile headlight.

### DETAILED DESCRIPTION OF THE PREFERRED EMBODIMENTS

Reference will now be made in detail to the preferred embodiments of the present invention. Whenever possible, the same reference numbers will be used throughout the drawings to refer to the same or like parts.

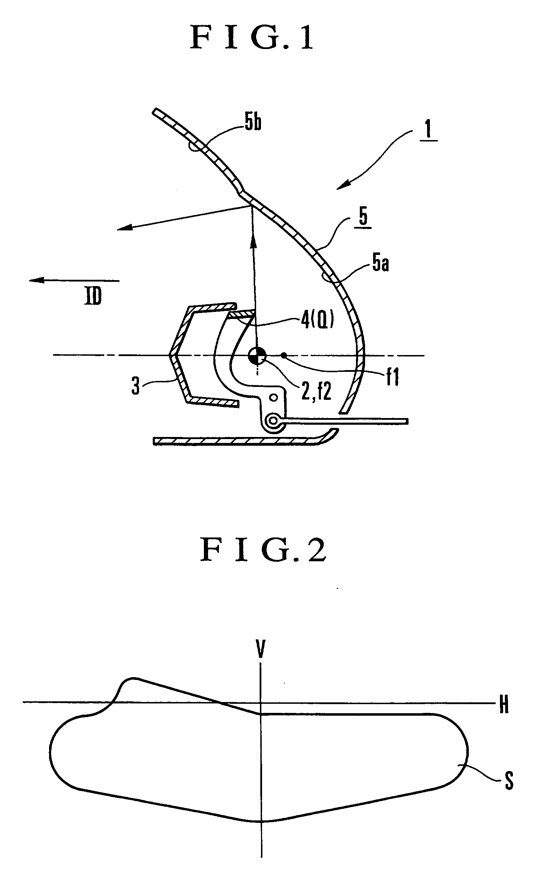

Fig. 1 illustrates a cross-sectional view of the first preferred embodiment of the present invention. An automobile headlight 1 comprises a light source 2, a reflector 5 having a low beam reflector portion 5a, which reflects light emitted from the light source 2 downwardly to form a light distribution pattern S for the low beam mode, and a high beam reflector portion 5b, which reflects light emitted from the light source 2 horizontally to the front of the automobile headlight 1 when the movable shade 4 is in a position for the high beam mode, a fixed shade 3, a movable shade 4 capable of taking a high beam position P or a low beam position Q depending on the high beam mode or the low beam mode, and a driving unit such as a solenoid or the like, not illustrated herein, connected to the movable shade 4 for changing the position of the movable shade 4. The low beam reflector portion 5a has a (rotated) parabolic surface with a focus f1 positioned behind (backward) of the light source 2 e.g. opposite to an illuminating direction, ID (Fig. 1). The high beam reflector portion 5b is around an upper end of the reflector 5 when the headlight 1 is installed in the automobile, and also has a (rotated) parabolic surface with a focus f2 on the light source 2. The fixed shade 3 prohibits light emitted from the light source 2 from traveling directly into the illuminating direction, and also prohibits an unnecessary portion of reflected light from the reflector 5 to form undesired light distribution patterns.

Fig. 2 illustrates a light distribution pattern S emitted from the automobile headlight 1 for driving in the left lane when passing another vehicle on the right side. In order to prevent dazzling a driver in an on-coming lane, all light emitted upward is suppressed from the automobile headlight 1 except light emitted toward a left gore area allowing the driver to recognize a road sign. Alternately, the light distribution pattern could be configured for driving in the right lane when passing another vehicle on the left side. Additionally, in order to help a driver recognize the road surface in a close range ahead of the automobile, the light distribution pattern S includes relatively intense light directed downwardly. The light distribution pattern S of the automobile headlight 1 does not substantially differ from the light distribution pattern S the conventional automobile headlight 90 in its shape and distribution of luminous flux density, which are determined to conform with legal restrictions.

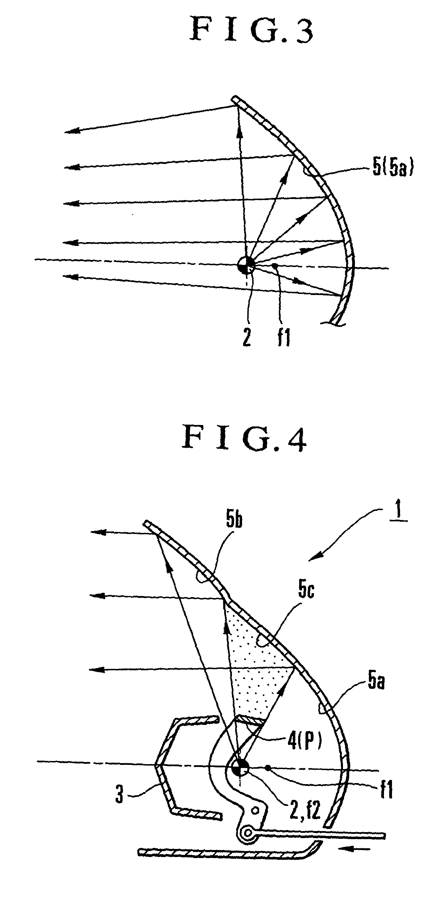

Fig. 3 illustrates the relationship between reflected light direction, positions of light source 2, the low beam reflector portion 5a of the reflector 5, and a focus f1 of the parabolic surface of the low beam reflector portion 5a. The focus f1 is behind the light source 2. Light reflected from the low beam reflector portion 5a around a portion horizontal to the light source 2 is directed horizontally to the front. As a reflecting point on the low beam reflector portion 5a moves upward relative to the light source 2, the direction of reflected light changes gradually to downward. Accordingly, light reflected on the upper end of the low beam reflector portion 5a illuminates the road surface in close range to the automobile. If the light distribution pattern S for the low beam mode is changed to a light distribution pattern M for the high beam mode while the light on the road surface in close distance or range to the automobile remains, the driver perceives the road surface in close range to the automobile to be much brighter than actual, although the luminous flux density in the range is low. Consequently, the driver's pupils contract, and luminosity and long distance visibility decrease.

Fig. 4 illustrates a cross-sectional view of the automobile headlight 1 when the movable shade 4 is in the high beam position P for the high beam mode. The movable shade 4 does not suppress light emitted from the light source 2 towards the high beam reflector portion 5b, but it does suppress light directed from the light source 2 to an upper end 5c of the low beam reflector portion 5a, because light reflected on the upper end 5c of the low beam reflector portion 5a is directed more downwardly than on any other portion of the low beam reflector portion 5a.

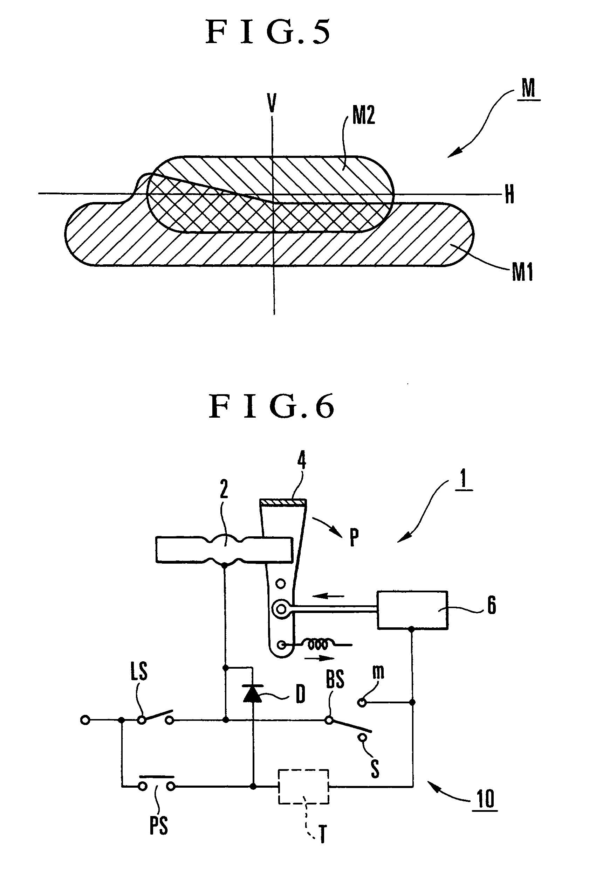

Fig. 5 illustrates a light distribution pattern M for the high beam mode comprising reflected light M1 reflected on the low beam reflector portion 5a, except on the upper end 5c, and reflected light M2 reflected on the high beam reflector portion 5b. Since the reflected light M1 does not include light reflected on the upper end 5c, which directs light more downwardly than any other portion of the low beam reflector portion 5a, the light distribution pattern M does not include a lower substantially triangular portion of the light distribution pattern S for the low beam mode, i.e., the road surface in a close distance or range to the automobile. Accordingly, this configuration prevents driver's luminosity or long distance visibility from decreasing even when the movable shade 4 is in the high beam position P.

Fig. 6 illustrates a wiring diagram or circuit 10 of the second preferred embodiment of the present invention for applying a passing function to the automobile headlight 1. The passing function instantly changes the light distribution pattern S for the low beam mode to the light distribution pattern M for the high beam mode, thus notifying other drivers of a driver's intention to pass to another car. This wiring enables the automobile headlight 1 to have the passing function, because the automobile headlight 1 changes its light distribution pattern by moving the movable shade 4 without adjusting the actual light source 2, and the position of the movable shade 4 is changed by a driving unit, such as a solenoid, which is capable of a quick movement.

The wiring diagram 10 comprises an automobile headlight 1, having a light source 2, a movable shade 4, a solenoid 6 connected to the movable shade 4, a switch BS connected to the solenoid 6 that is capable of changing its terminal between a terminal m for the high beam mode and a terminal s for the low beam mode, a timer T connected to the solenoid 6 for keeping the movable shade 4 in the position P for a predetermined time, a passing switch PS connected through the timer T to the solenoid 6, a lighting switch LS connected parallel to the passing switch PS and in series to the switch BS, and a diode D for preventing current from flowing to the solenoid 6 while the lighting switch LS is on.

When the passing function is used for passing another vehicle in daytime, since the light source 2 is off, electric power is supplied through the passing switch PS and the diode D to the light source 2, and is also supplied through the passing switch PS and the timer T to the solenoid 6, and thereby the automobile headlight 1 is instantly lit while the movable shade 4 is in the high beam position P.

The operational advantages of the automobile headlight 1 according to the preferred embodiment of the present invention will now be described. The automobile headlight 1 provides an improved light distribution pattern M for the high beam mode, while providing the substantially same light distribution pattern S for the low beam mode as the conventional one. Light emitted downwardly and arriving on the road surface in close range to the automobile is required for the light distribution pattern S when the low beam mode to form a lower substantially triangular portion of the light distribution pattern S, but the lower substantially triangular portion of the light distribution S is not required for the light distribution pattern M for the high beam mode. The movable shade 4 in the high beam position P suppresses light emitted from the light source 2 to the upper end 5c of the low beam reflector portion 5a, which reflects the light to form the lower substantially triangular portion of the light distribution pattern S, while passing the light emitted from the light source 2 toward the high beam reflector portion 5b and the low beam reflector portion 5a, except the upper end 5c, thereby preventing the driver from decreasing luminosity and long distance visibility when the high beam mode, i.e., not the low beam mode. Additionally, the automobile headlight 1 is applicable for the passing function, by connecting the solenoid 6 to the passing switch PS and the lighting switch LS.

It will be apparent to those skilled in the art that various changes and modifications can be made therein without departing from the scope of the appended claims.

## Claims

1. An automobile headlight (1) comprising:
a light source (2);
a movable shade (4) capable of taking a high beam position P or a low beam position Q depending on a high beam mode or a low beam mode;
a reflector (5) having a low beam reflector portion (5a) that reflects light emitted from the light source (2) downward to form a light distribution pattern (S) for the low beam mode, and a high beam reflector portion (5b) which reflects light emitted from the light source (2) when the movable shade (4) is in the high beam position (P) for the high beam mode; a fixed shade (3) which directs light emitted from the light source (2) towards the reflector (5); and
a driving unit connected to the movable shade (4) for changing a position of the movable shade (4),
**characterized in that:**
the movable shade (4) in the low beam position Q suppresses light emitted from the light source (2) toward the high beam reflector portion (5b) and passes light emitted from the light source (2) toward the low beam reflector portion (5a); and
the movable shade (4) in the high beam position P partly suppresses emitted light at an upper end (5c) of the low beam reflector portion (5a) and passes light emitted from the light source (2) toward the high beam reflector portion (5b) and the remaining low beam reflector portion (5a).

2. The automobile headlight (1) according to claim 1, **characterized in that** the driving unit comprises a passing switch (PS) for enabling a passing function.

3. The automobile headlight (1) according to claim 2, wherein the driving unit comprising:
a solenoid (6) connected to the movable shade (4);
a first switch (BS) connected to the solenoid (6) that is capable of changing between a first terminal m for the high beam mode and a second terminal s for the low beam mode;
a timer (T) connected to the solenoid (6), and connected in parallel to the first switch (BS), for keeping the movable shade (4) in the high beam position (P) for a predetermined time;
the passing switch (PS) connected through the timer (T) to the solenoid (6), and connected to a power supply, that allows current to flow to the timer (T) when the automobile is passing another vehicle;
a second switch (LS) connected to the power supply, and also connected parallel to the passing switch (PS) and in series with the first switch (BS), that allows current to flow to the first switch (BS) when the light source (2) is to be lit; and
a diode (D) connected at one end between the timer (T) and the passing switch (PS), and at the other end between the second switch (LS) and the first switch (BS), for preventing current from flowing to the solenoid (6) when the second switch (LS) is on.

## Patentansprüche

1. Automobilscheinwerfer (1), der Folgendes aufweist:
eine Lichtquelle (2);
eine bewegbare Abschirmung (4), die eine Hochstrahl- oder Fernlichtposition (P) oder eine Tiefstrahl- oder Abblendlichtposition (Q) abhängig von einem Hochstrahl- bzw. Fernlichtbetriebszustand oder einem Tiefstrahl- bzw. Abblendlichtbetriebszustand einnehmen kann;
einen Reflektor (5) mit einem Abblendlichtreflektorteil (5a), der Licht, welches von der Lichtquelle (2) ausgestrahlt wird, nach unten reflektiert, um ein Lichtverteilungsmuster (S) für den Abblendlichtbetriebszustand zu bilden, und einen Fernlichtreflektorteil (5b), der Licht, welches von der Lichtquelle (2) ausgestrahlt wird, wenn die bewegbare Abschirmung (4) in der Fernlichtposition (P) ist, für den Fernlichtbetriebszustand reflektiert;
eine festgelegte Abschirmung (3), die Licht, welches von der Lichtquelle (2) ausgestrahlt wird, zum Reflektor (5) leitet; und
eine Antriebseinheit, die mit der bewegbaren Abschirmung (4) verbunden ist, um eine Position der bewegbaren Abschirmung (4) zu verändern,
**dadurch gekennzeichnet, dass**
die bewegbare Abschirmung (4) in der Abblendlichtposition (Q) Licht unterdrückt, welches von der Lichtquelle (2) zum Fernlichtreflektorteil (5b) ausgestrahlt wird, und Licht durchlässt, welches von der Lichtquelle (2) zum Abblendlichtreflektorteil (5a) ausgestrahlt wird; und
wobei die bewegbare Abschirmung (4) in der Fernlichtposition (P) teilweise ausgestrahltes Licht an einem oberen Ende (5c) des Abblendlichtreflektorteils (5a) unterdrückt und Licht durchlässt, welches von der Lichtquelle (2) zum Fernlichtreflektorteil (5b) und dem restlichen Abblendlichtreflektorteil (5a) ausgestrahlt wird.

2. Automobilscheinwerfer (1) nach Anspruch 1, **dadurch gekennzeichnet, dass** die Antriebseinheit einen Lichthupenschalter (PS) zum Einschalten einer Lichthupenfunktion aufweist.

3. Automobilscheinwerfer (1) nach Anspruch 2, wobei die Antriebseinheit Folgendes aufweist:
einen Elektromagneten (6), der mit der bewegbaren Abschirmung (4) verbunden ist;
einen ersten Schalter (BS), der mit dem Elektromagneten (6) verbunden ist, der zwischen einem ersten Anschluss m für den Fernlichtbetriebszustand und einem zweiten Anschluss s für den Abblendlichtbetriebszustand umschalten kann;
eine Zeitsteuerung (T), die mit dem Elektromagneten (6) verbunden ist, und die parallel zum ersten Schalter (BS) angeschlossen ist, um die bewegbare Abschirmung (4) in der Fernlichtposition P für eine vorbestimmte Zeit zu halten;
wobei der Lichthupenschalter (PS) durch die Zeitsteuerung (T) mit dem Elektromagneten (6) verbunden ist und mit einer Leistungsversorgung verbunden ist, die gestattet, dass ein Strom zur Zeitsteuerung (T) fließt, wenn das Automobil ein anderes Fahrzeug überholt;
einen zweiten Schalter (LS), der mit der Leistungsversorgung verbunden ist und auch parallel zum Lichthupenschalter (PS) und in Reihe mit dem ersten Schalter (BS) angeschlossen ist, der gestattet, dass Strom zum ersten Schalter (BS) fließt, wenn die Lichtquelle (2) angeschaltet werden soll; und
eine Diode (D), die an einem Ende zwischen der Zeitsteuerung (T) und dem Lichthupenschalter (PS) angeschlossen ist, und am anderen Ende zwischen dem zweiten Schalter (LS) und dem ersten Schalter (BS), um zu verhindern, dass Strom zum Elektromagneten (6) fließt, wenn der zweite Schalter (LS) an ist.

## Revendications

1. Phare d'automobile (1) comprenant :
une source lumineuse (2) ;
un cache mobile (4) pouvant prendre une position de faisceau haut P ou une position de faisceau bas Q en fonction d'un mode de faisceau haut ou d'un mode de faisceau bas ;
un réflecteur (5) ayant une partie de réflecteur de faisceau bas (5a) qui réfléchit de la lumière émise par la source lumineuse (2) vers le bas pour former un motif de distribution de lumière (S) pour le mode de faisceau bas, et une partie de réflecteur de faisceau haut (5b) qui réfléchit de la lumière émise par la source lumineuse (2) lorsque le cache mobile (4) est dans la position de faisceau haut (P) pour le mode de faisceau haut ; un cache fixe (3) qui dirige de la lumière émise par la source lumineuse (2) vers le réflecteur (5) ; et
un module de pilotage connecté au cache mobile (4) pour modifier la position du cache mobile (4),
**caractérisé en ce que :**
le cache mobile (4) dans la position de faisceau bas Q supprime la lumière émise par la source lumineuse (2) vers la partie de réflecteur de faisceau haut (5b) et laisse passer la lumière émise par la source lumineuse (2) vers la partie de réflecteur de faisceau bas (5a) ; et
le cache mobile (4) dans la position de faisceau haut P supprime partiellement la lumière émise au niveau d'une extrémité supérieure (5c) de la partie de réflecteur de faisceau bas (5a) et laisse passer la lumière émise par la source lumineuse (2) vers la partie de réflecteur de faisceau haut (5b) et la partie de réflecteur de faisceau bas (5a) restante.

2. Phare d'automobile (1) selon la revendication 1, **caractérisé en ce que** le module de pilotage comprend un commutateur de croisement (PS) pour permettre une fonction de croisement.

3. Phare d'automobile (1) selon la revendication 2, dans lequel le module de pilotage comprend :
un électro-aimant (6) connecté au cache mobile (4) ;
un premier commutateur (BS) connecté à l'électro-aimant (6) qui peut être déplacé entre une première borne m pour le mode de faisceau haut et une deuxième borne s pour le mode de faisceau bas ;
un minuteur (T) connecté à l'électro-aimant (6), et connecté en parallèle avec le premier commutateur (BS), pour maintenir le cache mobile (4) dans la position de faisceau haut (P) pendant une durée prédéterminée ;
le commutateur de croisement (PS) connecté par l'intermédiaire du minuteur (T) à l'électro-aimant (6), et connecté à une alimentation, qui permet le passage de courant vers le minuteur (T) lorsque l'automobile croise un autre véhicule ;
un deuxième commutateur (LS) connecté à l'alimentation, et connecté aussi en parallèle avec le commutateur de croisement (PS) et en série avec le premier commutateur (BS), qui permet le passage du courant vers le premier commutateur (BS) lorsque la source lumineuse (2) doit être allumée ; et
une diode (D) connectée au niveau d'une de ses extrémités entre le minuteur (T) et le commutateur de croisement (PS), et au niveau de l'autre extrémité entre le deuxième commutateur (LS) et le premier commutateur (BS), pour empêcher le passage de courant vers l'électro-aimant (6) lorsque le deuxième commutateur (LS) est actif.
